# EUROPÄISCHE PATENTSCHRIFT

(11) **EP 3 257 384 B1**
(45) Veröffentlichungstag und Bekanntmachung des Hinweises auf die Patenterteilung: **13.03.2019**
(21) Anmeldenummer: 16174774.6
(22) Anmeldetag: 16.06.2016
(51) Int. Cl.: A23L 33/105, A23L 21/10, A23L 21/12, A23L 21/15, A23L 19/00, A23L 33/16, A23L 33/22, A23L 23/10, A23L 23/00, A23L 2/02

(54) **VERFAHREN ZUR HERSTELLUNG EINES SAFTGETRÄNKS**
PROCESS FOR PRODUCING A JUICE DRINK
PROCÉDÉ POUR LA PRODUCTION D'UN JUS

(43) Veröffentlichungstag der Anmeldung: 20.12.2017
(73) Patentinhaber: Eckes-Granini Group GmbH, 55268 Nieder-Olm (DE)
(72) Erfinder: Dechent, Hans-Mario, 55291 Saulheim (DE); Nick, Klaus, 55469 Klosterkumbd (DE); Herdegen, Volker, 55268 Nieder-Olm (DE)
(74) Vertreter: Vossius & Partner Patentanwälte Rechtsanwälte mbB

(56) Entgegenhaltungen:
- DE-B- 1 276 989
- WILL F ET AL: "Enzymatic liquefaction of apple mash by a two step process", FRUIT PROCESSING, SCHOENBORN, DE, Bd. 13, Nr. 6, 24. Juni 2003 (2003-06-24), Seiten 429-432, XP009191310, ISSN: 0939-4435
- SABINE SEMBRIES ET AL: "Physiological Effects of Extraction Juices from Apple, Grape, and Red Beet Pomaces in Rats", JOURNAL OF AGRICULTURAL AND FOOD CHEMISTRY, Bd. 54, Nr. 26, 12. Mai 2016 (2016-05-12), Seiten 10269-10280, XP055294332, US ISSN: 0021-8561, DOI: 10.1021/jf0618168

## Beschreibung

Die vorliegende Erfindung betrifft ein neuartiges Verfahren zur Herstellung eines ballaststoffhaltigen Saftgetränks. Mit Hilfe des erfindungsgemäßen Verfahrens lässt sich auf vorteilhafte Weise die Viskosität des Getränks regulieren, während sowohl ein hoher Ballaststoffgehalt als auch ein hoher Gehalt an wertgebenden Inhaltsstoffen bereit gestellt werden kann.

Ballaststoffhaltige Saftgetränke, insbesondere sogenannte "Smoothies", erfreuen sich großer Beliebtheit. Die Herstellung derartiger Getränke in größerem Maßstab nach derzeit etablierten Verfahren setzt jedoch Grenzen im Hinblick auf die gewünschte Konsistenz, und damit verbunden auch im Hinblick auf die Variabilität der Geschmacksrichtungen. Zur Bereitstellung einer vom Verbraucher als angenehm empfundenen Viskosität kommen häufig entweder Bananen- oder Mangopüree zum Einsatz, die ohne eine Erwärmung unmittelbar durch Pürieren der Früchte hergestellt werden können. Diese Früchte sind jedoch verhältnismäßig teuer, und durch ihre Verwendung wird die Geschmacksrichtung des Getränks bereits in erheblichem Umfang vorgeprägt. Alternativ kommt kostengünstigeres Fruchtpüree, insbesondere Apfelpüree, zum Einsatz. Es kann mit Hilfe herkömmlicher Verfahren zur Püreeherstellung bereit gestellt werden, bei denen die zerkleinerten Früchte direkt erhitzt werden und anschließend die so behandelte Maische über eine Püreemaschine von groben Bestandteilen getrennt wird (vgl. "Frucht- und Gemüsesäfte", Schrobinger, 3. Auflage). Allerdings verleiht die Verwendung eines solchen Pürees dem damit hergestellten Getränk häufig eine charakteristische Geschmacksnote ("Musnote"). Dies ist auch deswegen von besonderer Bedeutung, weil die Pürees zum Erreichen einer Viskosität, die vom Verbraucher typischerweise mit einem Smoothie verbunden wird, in relativ großen Anteilen im Getränk eingesetzt werden müssen.

Der vorliegenden Erfindung lag daher die Aufgabe zugrunde, ein Verfahren zur Herstellung eines ballaststoffhaltigen Saftgetränks zur Verfügung zu stellen, das eine breite geschmackliche Vielfalt der damit erhaltenen Getränke ermöglicht, den Erhalt der wertgebenden Inhaltsstoffe aus den Rohmaterialien im Endprodukt gewährleistet und das dabei auch in größerem Maßstab ökonomisch durchführbar ist.

Als Lösung dieser Aufgabe stellt die vorliegende Erfindung das in den beigefügten Ansprüchen definierte Verfahren zur Herstellung eines ballaststoffhaltigen Saftgetränks bereit.
Das erfindungsgemäße Verfahren umfasst danach die folgenden Schritte:
a) Bereitstellen einer Maische mit einer Fruchtzusammensetzung, die eine oder mehrere Arten von Früchten mit verzehrfähiger Schale und keine Zitrusfrüchte beinhaltet;
b) Teilentsaften der Maische, um einen Presssaft und eine teilentsaftete Maische zu erhalten;
c) Versetzen der teilentsafteten Maische mit einer Enzymzubereitung, die mindestens ein Enzym enthält, das in der Lage ist, ein Polysaccharid hydrolytisch zu spalten, und Einwirken lassen der Enzymzubereitung auf die teilentsaftete Maische;
d) Abtrennen von groben Bestandteilen aus der enzymierten, teilentsafteten Maische mit Hilfe mindestens eines Siebs, um so eine ballaststoffhaltige, flüssige Fruchtkomponente zu gewinnen;
e) Vermischen der ballaststoffhaltigen, flüssigen Fruchtkomponente mit Presssaft zu einem ballaststoffhaltigen Saftgetränk, wobei nach dem Teilentsaften der Maische in Schritt b) bis zur Bereitstellung des ballaststoffhaltigen Saftgetränks in Schritt e) keine Entsaftung eines Zwischenprodukts oder des Endprodukts stattfindet.
Die im Rahmen des erfindungsgemäßen Verfahrens gewonnene ballaststoffhaltige, flüssige Fruchtkomponente führt zu einer Reihe von Vorteilen, die insbesondere bei der Herstellung eines ballaststoffhaltigen Saftgetränks wie einem Smoothie zum Tragen kommen. So wurde festgestellt, dass die Fruchtkomponente aufgrund ihrer rheologischen Eigenschaften überraschenderweise bereits in relativ kleinen Anteilen am Saftgetränk eine gewünschte hohe Viskosität bereit stellen kann. Dadurch erlaubt ihr Einsatz eine große Variationsbreite an weiteren Zutaten im Saftgetränk, was z.B. zum Erreichen einer höheren geschmacklichen Vielfalt führen kann. Darüber hinaus enthält sie typischerweise große Mengen von Ballaststoffen aus den als Rohmaterial eingesetzten Früchten, die so im Saftgetränk zur Verfügung gestellt werden können. Schließlich können aufgrund des schonenden Verfahrens zur Bereitstellung der Fruchtkomponente erhebliche Anteile der wertgebenden Inhaltsstoffe aus den als Rohmaterial eingesetzten Früchten in das Endprodukt überführt werden, und es werden darüber hinaus auch ausgezeichnete sensorische Eigenschaften erreicht.
Bei dem erfindungsgemäß hergestellten ballaststoffhaltigen Saftgetränk handelt es sich um ein flüssiges, trinkbares Produkt. Es beinhaltet aufgrund des Herstellungsverfahrens Fruchtbestandteile, d.h. Bestandteile die aus Früchten (einschließlich Fruchtgemüse), bevorzugt aus Obst oder Fruchtgemüse, stärker bevorzugt aus Obst, gewonnen werden können. Zusätzlich können optional im Saftgetränk z.B. auch Bestandteile enthalten sein, die aus Gemüsesorten gewonnen werden können, bei denen es sich nicht um Fruchtgemüse handelt. Bei solchen Frucht- oder Gemüsebestandteilen handelt es sich beispielsweise um Frucht- oder Gemüsesaft, Frucht- oder Gemüsepulpe, Frucht- oder Gemüsepüree, oder Frucht- oder Gemüsezellen.

Wie für den Fachmann verständlich, wird der Begriff der Frucht hier entsprechend der Begriffsbestimmung in Anhang II der Richtlinie 2012/12/EU des Europäischen Parlaments und des Rates vom 19. April 2012 zur Änderung der Richtlinie 2001/112/EG des Rates über Fruchtsäfte und bestimmte gleichartige Erzeugnisse für die menschliche Ernährung (im Folgenden auch "EU-Fruchtsaft-Richtlinie") verwendet. Soweit nicht anders angegeben, umfasst er alle Früchte, einschließlich Früchte einjähriger Pflanzen wie Tomaten, die auch als Fruchtgemüse bezeichnet werden.

Als Obst werden vorliegend gemäß allgemeinem Verständnis auf dem Fachgebiet die in rohem Zustand essbaren Früchte mehrjähriger Bäume oder Sträucher bezeichnet (Römpp-Lexikon, Lebensmittelchemie, 1. Auflage, 1995).

Als Gemüse werden alle einjährigen Pflanzen oder Teile von einjährigen Pflanzen bezeichnet, die roh oder verarbeitet der menschlichen Ernährung dienen (Römpp-Lexikon, Lebensmittelchemie, 1. Auflage, 1995). Soweit nicht anders angegeben, umfasst der Begriff Gemüse wie hier verwendet damit auch Früchte von einjährigen Pflanzen (z.B. Tomaten), die auch als "Fruchtgemüse" bezeichnet werden.

Die Fruchtbestandteile machen in der Regel mindestens 50 Gew.% des Saftgetränks aus, stärker bevorzugt mindestens 80 Gew.%, noch stärker bevorzugt mindestens 90 Gew.%. Besonders bevorzugt werden Saftgetränke hergestellt, die ausschließlich aus Fruchtbestandteilen bestehen. So kann es sich bei dem Saftgetränk z.B. um einen Fruchtsaft im Sinne der EU-Fruchtsaft-Richtlinie handeln.

Die Fruchtbestandteile können ausschließlich diejenigen sein, die als Bestandteil der Maische in Schritt a) in das Verfahren eingebracht werden, um einen Presssaft und die ballaststoffhaltige Fruchtkomponente zu erzeugen. Es können jedoch im Verlauf des Verfahrens auch weitere Fruchtbestandteile, z.B. in Form eines Presssaftes, einer Pulpe oder eines Pürees von Früchten, die nicht in der Maische in Schritt a) enthalten waren, in das Saftgetränk eingebracht werden.

Gemüsebestandteile aus Gemüsesorten, bei denen es sich nicht um Fruchtgemüse handelt, können ebenfalls z.B. in Form eines Saftes, einer Pulpe oder eines Pürees in das Saftgetränk eingebracht werden.
Das erfindungsgemäß hergestellte Saftgetränk enthält als Ballaststoffe zumindest diejenigen Ballaststoffe, die bei Durchführung des Verfahrens aus der in Schritt a) bereitgestellten Maische erhalten werden. Weitere Ballaststoffe können dem Saftgetränk zugegeben werden, dies ist jedoch in der Regel nicht notwendig, so dass bevorzugt der Ballaststoffanteil des Saftgetränks ausschließlich aus der in Schritt a) bereit gestellten Maische gewonnen werden kann. Der Ballaststoffgehalt des erfindungsgemäß hergestellten Saftgetränks, gemessen nach ASU L 00.00-18 (1997), beträgt bevorzugt 0,5 bis 15 g/l, stärker bevorzugt 1,0 bis 10 g/l.
In Schritt a) des erfindungsgemäßen Verfahrens wird eine Maische bereitgestellt mit einer Fruchtzusammensetzung, die eine oder mehrere Arten von Früchten mit verzehrbarer Schale und keine Zitrusfrüchte beinhaltet. Das Bereitstellen der Maische erfolgt mit Hilfe von dem Fachmann geläufigen Verfahren, wie Zerkleinern von Früchten z.B. durch Schneiden, Zerdrücken und/oder Vermahlen der Früchte. Beispielsweise kann dazu eine Rätzmühle eingesetzt werden.

Die Fruchtzusammensetzung der Maische (d.h. die aus Früchten gewonnenen Bestandteile der Maische) beinhaltet Früchte mit verzehrfähiger Schale, bevorzugt Obst mit verzehrfähiger Schale, und bevorzugt besteht die Fruchtzusammensetzung der Maische aus Früchten mit verzehrfähiger Schale, stärker bevorzugt aus Obst mit verzehrfähiger Schale. Solche Früchte mit verzehrfähiger Schale werden bevorzugt ungeschält zu einer Maische verarbeitet. Als Früchte mit verzehrfähiger Schale kommt bevorzugt Kernobst, Steinobst und/oder Beerenobst, besonders bevorzugt Kernobst und/oder Steinobst und insbesondere bevorzugt Kernobst zum Einsatz. Bevorzugte Beispiele geeigneter Obstsorten sind im Folgenden aufgeführt.
Kernobst: Äpfel, Birnen, Quitten;
Steinobst: Aprikosen, Pfirsiche, Kirschen, Pflaumen, Nektarinen;
Beerenobst: Brombeeren, Johannisbeeren, Blaubeeren, Preiselbeeren;
Zitrusfrüchte sind nicht in der Maische enthalten. Auch Südfrüchte sind bevorzugt nicht in der Maische enthalten.

Besonders bevorzugt enthält die Fruchtzusammensetzung der in Schritt a) bereit gestellten Maische Äpfel und/oder Birnen, stärker bevorzugt zerkleinerte vollständige Äpfel und/oder zerkleinerte vollständige Birnen, insbesondere bevorzugt zerkleinerte vollständige Äpfel. Die Fruchtzusammensetzung der Maische kann auch aus Äpfeln und/oder Birnen, stärker bevorzugt zerkleinerten vollständigen Äpfeln und/oder zerkleinerten vollständigen Birnen, insbesondere bevorzugt zerkleinerten vollständigen Äpfeln, bestehen. Als "vollständig" werden hier Äpfel und Birnen bezeichnet, von denen bei der Bereitstellung der Maische weder Schale noch Kerngehäuse entfernt wurden.

Neben den Früchten, die die Fruchtzusammensetzung der Maische bilden, kann die Maische noch andere Bestandteile enthalten. Als übliche optionale Bestandteile können z.B. Vitamin C oder hinzugefügtes Wasser, das nicht aus den Früchten stammt, genannt werden.

In Schritt b) des erfindungsgemäßen Verfahrens wird die in Schritt a) bereitgestellte Maische teilentsaftet, d.h. der in der Maische enthaltene Fruchtsaft wird teilweise, aber nicht vollständig, als Presssaft aus der Maische gewonnen. So werden ein Presssaft und eine teilentsaftete Maische erhalten. Zur Durchführung dieses Schritts eignen sich herkömmliche Entsaftungsverfahren, die dem Fachmann geläufig sind. In der Regel erfolgt das Teilentsaften durch Abpressen der Maische, beispielsweise mit Hilfe einer Bandpresse.

Typischerweise ist die durch die Teilentsaftung in Schritt b) erhaltene Menge an Presssaft so begrenzt, dass die nach der Teilentsaftung verbleibende teilentsaftete Maische noch fließfähig und pumpfähig ist, und so z.B. mit Hilfe einer geeigneten Pumpe gefördert werden kann. Bevorzugt erfolgt das Teilentsaften der Maische in Schritt b) so, dass eine Menge an Presssaft gewonnen wird, deren Gewicht 10 bis 70 Gew%, stärker bevorzugt 20 bis 70 Gew%, insbesondere bevorzugt 30 bis 60 Gew% des Gesamtgewichts der in Schritt a) bereitgestellten Maische entspricht. Demgemäß beträgt das Gewicht der teilentsafteten Maische, der in Schritt c) weiter verarbeitet wird, bevorzugt 30 bis 90 Gew%, stärker bevorzugt 30 bis 80 Gew%, und insbesondere bevorzugt 40 bis 70 Gew% des Gesamtgewichts der in Schritt a) bereitgestellten Maische.

Der gewonnene Presssaft kann bei Bedarf weiteren Behandlungsschritten unterzogen werden, z.B. kann nach dem Abpressen eine Pasteurisation erfolgen. Geeignete Bedingungen sind dem Fachmann geläufig, beispielsweise kann eine erhöhte Temperatur von 60 bis 96 °C, und eine Haltezeit bei der erhöhten Temperatur von 10s bis 60s eingesetzt werden.

In Schritt c) des erfindungsgemäßen Verfahrens wird die in Schritt b) erhaltene teilentsaftete Maische mit einer Enzymzubereitung versetzt, die mindestens ein Enzym enthält, das in der Lage ist, ein Polysaccharid, insbesondere ein Polysaccharid aus Früchten, hydrolytisch zu spalten. Anschließend lässt man die Enzymzubereitung auf die teilentsaftete Maische einwirken. Geeignete Enzyme, mit deren Hilfe Polysaccharide aus Früchten hydrolytisch gespalten werden können, sind dem Fachmann bekannt und finden bei der Saftherstellung insbesondere zur Steigerung der Saftausbeute Anwendung (z.B. DE 3221576 A1 oder DE 3414555 A1). Als Enzymzubereitung wird dabei ein Produkt bezeichnet, das ein oder mehrere Typen von Enzymen in aktiver oder aktivierbarer Form enthält. Solche Zubereitungen sind kommerziell erhältlich, typischerweise in Form von Lösungen oder Suspensionen von Enzymen. Bevorzugt wird im Rahmen des erfindungsgemäßen Verfahrens eine Enzymzubereitung eingesetzt, die mindestens ein Enzym enthält, das ausgewählt ist aus pektinolytischen, cellulolytischen und proteolytischen Enzymen, stärker bevorzugt aus pektinolytischen und cellulolytischen Enzymen. Insbesondere bevorzugt wird eine Enzymzubereitung verwendet, die ein lt. EU-Fruchtsaft-Richtlinie zugelassenes pektinolytisches Enzym enthält.

Das Einwirken der Enzymzubereitung auf die teilentsaftete Maische (hier auch als "Enzymieren" bezeichnet) beinhaltet in der Regel das Vermischen der teilentsafteten Maische mit der Enzymzubereitung. Die bevorzugte Temperatur, bei der man die Enzymzubereitung auf die teilentsaftete Maische einwirken lässt, beträgt 20 bis 60 °C, stärker bevorzugt 30 bis 50 °C. Zum Einstellen von Temperaturen oberhalb der Raumtemperatur kann die teilentsaftete Maische vor, während oder nach der Zugabe der Enzymzubereitung auf die gewünschte Temperatur gebracht werden. Zur besseren Kontrolle der Einwirkung des Enzyms ist es bevorzugt, die teilentsaftete Maische vor der Zugabe der Enzymzubereitung auf die gewünschte Temperatur einzustellen.

Der bevorzugte Zeitraum für das Einwirken der Enzymzubereitung auf die teilentsaftete Maische beträgt 20 bis 240 min, stärker bevorzugt 30 bis 180 min, insbesondere bevorzugt 60 bis 120 min.

Nach der Einwirkzeit werden die Enzyme in der Regel durch Erhitzen der enzymierten teilentsafteten Maische deaktiviert. Bevorzugt wird dabei die enzymierte teilentsaftete Maische auf eine Temperatur von über 60 °C, stärker bevorzugt von über 60 bis 96 °C, und besonders bevorzugt von 70 bis 96 °C erhitzt. Diese Deaktivierung kann vor, während oder nach dem in Schritt d) durchgeführten Abtrennen von groben Bestandteilen erfolgen. Beinhaltet das Abtrennen von groben Bestandteilen beispielsweise eine Heißextraktion, so kann eine Deaktivierung der Enzyme vorteilhafterweise so durchgeführt werden, dass die bei der Deaktivierung zugeführte Wärme bei der Heißextraktion genutzt werden kann, oder umgekehrt.

In Schritt d) erfolgt ein Abtrennen (bzw. Entfernen) von groben Bestandteilen aus der enzymierten, teilentsafteten Maische mit Hilfe eines Siebs, um so eine ballaststoffhaltige, flüssige Fruchtkomponente zu gewinnen. Dabei sollte für den fachkundigen Leser klar sein, dass die abzutrennenden groben Bestandteile im Sieb zurück bleiben, und als ballaststoffhaltige, flüssige Fruchtkomponente diejenigen Bestandteile der enzymierten, teilentsafteten Maische gewonnen werden, die das Sieb durchlaufen haben. Grobe Bestandteile, die bei diesem Schritt abgetrennt werden, können z.B. Kerne oder Kernreste, Reste von Kerngehäusen, Schalenreste und/oder Stiele sein.

Die enzymierte, teilentsaftete Maische kann in Schritt d) einmal oder mehrmals ein Sieb durchlaufen. Bevorzugte Siebgrößen (bezogen auf die Größe der Löcher des Siebs) liegen im Bereich von 0,3 bis 4,0 mm, besonders bevorzugt 0,5 bis 3,0 mm. Bei mehrfachem Durchlaufen eines Siebes ist es bevorzugt, dass die Siebgröße bei jedem Siebvorgang in dem genannten Bereich liegt, dass aber die Siebgröße von einem Siebvorgang zum nächsten abnimmt. Der Begriff des Durchlaufens des Siebs umfasst hier sowohl die Möglichkeit, dass die enzymierte, teilentsaftete Maische das Sieb nur aufgrund der Wirkung der Schwerkraft durchläuft, als auch die Möglichkeit, dass er durch Anwendung von zusätzlichem Druck das Sieb durchläuft, wobei das Durchlaufen des Siebs unter Anwendung von Druck auch als Passieren bezeichnet wird.

Bevorzugt wird die enzymierte, teilentsaftete Maische in Schritt d) einmalig oder mehrmalig durch ein Sieb passiert, wobei die vorstehenden Angaben zur Siebgröße ebenfalls gelten. Der Vorgang des Passierens durch ein Sieb kann vorteilhafterweise mit Hilfe einer Püreemaschine durchgeführt werden. Besonders bevorzugt wird die enzymierte, teilentsaftete Maische mindestens zweimal, insbesondere genau zweimal, durch ein Sieb passiert, wobei für den ersten Passierschritt ein Sieb mit einer Siebgröße von 1,0 bis 4,0 mm, bevorzugt 1,5 bis 3,0 mm verwendet wird, und für den zweiten Passierschritt ein Sieb mit einer Siebgröße von 0,3 bis 1,5 mm, bevorzugt 0,5 bis 1,0 mm. Wie für den Fachmann verständlich, sollte die Siebgröße im zweiten Schritt kleiner gewählt werden als im ersten Schritt. Weitere Siebvorgänge sind möglich, bringen in der Regel jedoch keine zusätzliche Verbesserung. Zwischen dem ersten und dem zweiten Passierschritt kann beispielsweise auch eine Deaktivierung vorhandener Enzyme durch Erhitzen erfolgen, wie sie vorstehend beschrieben ist.

Die enzymierte, teilentsaftete Maische kann während des Durchlaufens des Siebs, insbesondere beim Passieren durch das Sieb, Raumtemperatur aufweisen (z.B. 18 bis 25°C). Er kann jedoch auch erhitzt werden (z.B. auf 20 bis 50°C). Durchläuft die enzymierte, teilentsaftete Maische zweimal ein Sieb oder wird insbesondere zweimal durch ein Sieb passiert, so wird bevorzugt der erste Sieb- bzw. Passierschritt durchgeführt, während die teilentsaftete Maische eine Temperatur von 10 bis 50°C aufweist (auch als Kaltextraktion bezeichnet), und der zweite Sieb- bzw. Passierschritt wird durchgeführt, während die teilentsaftete Maische eine Temperatur von 60 bis 90°C aufweist (auch als Heißextraktion bezeichnet)
Die mit Hilfe eines Siebes von groben Bestandteilen befreite enzymierte, teilentsaftete Maische wird vorliegend auch als ballaststoffhaltige, flüssige Fruchtkomponente, oder zur Vereinfachung als flüssige Fruchtkomponente bezeichnet. Ballaststoffe sind die vom Körper nicht abbaubaren pflanzlichen Nahrungsbestandteile. Sie wirken sich positiv auf die Verdauung aus, verringern somit das Risiko für Herz-Kreislauf-Erkrankungen, Diabetes und Erkrankungen des Darms. Zudem können sie den Cholesterinspiegel positiv beeinflussen. In den Früchten kommen sie vorwiegend in den Schalenbestandteilen und den Zellwänden vor. Die flüssige Fruchtkomponente enthält Ballaststoffe, die aus den Früchten der in Schritt a) bereit gestellten Maische gewonnen wurden. Bevorzugt liegt der der Ballaststoffgehalt der in Schritt d) gewonnenen flüssigen Fruchtkomponente im Bereich von 5 bis 30 g/l, besonders bevorzugt im Bereich von 10 bis 25 g/l, gemessen nach ASU §64 LFGB L 00.00-18 (1997).

Wie für den Fachmann verständlich, werden im Rahmen des erfindungsgemäßen Verfahrens die enzymierte teilentsaftete Maische bzw. die flüssige Fruchtkomponente zum Bereitstellen eines gewünschten hohen Ballaststoffgehalts keiner Entsaftung, z.B. durch Abpressen oder Abzentrifugieren von Saft, unterzogen. D.h. das erfindungsgemäße Verfahren wird typischerweise so durchgeführt, dass nach dem Teilentsaften der Maische in Schritt b) bis zur Breitstellung des ballaststoffhaltigen Saftgetränk in Schritt e) keine Entsaftung eines Zwischenprodukts oder des Endprodukts mehr stattfindet.
Mit Hilfe des Enzymierens der teilentsafteten Maische können erhebliche Anteile der wertgebenden Inhaltsstoffe aus den zum Bereitstellen der Maische eingesetzten Früchte in das Endprodukt überführt werden. Beispielsweise erleichtert der Einsatz der Enzyme die Gewinnung von Inhaltsstoffen, die vor allem in der Schale auftreten, wie Flavonoiden, z.B. Phlorizin, Procyanidin B2, Cumaroylglucose und/oder Quercetin-Glucoside. Darüber hinaus weist die flüssige Fruchtkomponente typischerweise auch hohe Gehalte von Mineralien, wie Kalzium, Natrium und Eisen auf. Vorteilhafterweise sind die Gehalte an Ballaststoffen, Mineralien und/oder Flavonoiden in der flüssigen Fruchtkomponente höher als in einem Presssaft oder einem Püree, die aus entsprechenden Früchten mit herkömmlichen Methoden hergestellt wurden.

Flavonoide sind eine Gruppe sekundärer Pflanzenstoffe, von denen sich die höchsten Konzentrationen in den Schalen von Früchten finden. Wissenschaftliche Studien zeigten, dass Flavonoide die körpereigene Abwehr durch ihre antioxidativen Eigenschaften unterstützen. Phlorizin ist ein pflanzliches Glycosid aus der Gruppe der Flavonoide. Es verzögert die Glucose-Resorption im Körper. Cumaroylglucose ist eine Hydroxyzimtsäure, ein Derivat der Zimtsäure, das vor allem in den Schalenbestandteilen von Früchten vorkommt. Procyanidin B2 ist ein Polyphenol, welches starke entzündungshemmende und anti-tumor Eigenschaften hat. Es handelt sich um ein Dimer des Epicatechins mit starken antioxidativen Eigenschaften (Lu und Yeap Foo, "Antioxidant and radical scavenging activities of polyphenols from apple pomace", Food Chem. 68, 81-85, 2000). Quercetin-Glycoside gehören ebenfalls zu den Flavonoiden. Die natürliche Form ist das Glycosid, welches vor allem in den farbigen Schalenbestandteilen vorkommt. Sie haben antioxidative und antikarzinogene Wirkungen.

Kalzium (Ca) ist der Mineralstoff, der im menschlichen Körper in der höchsten Konzentration vorkommt. Der Körper benötigt Kalzium, um gesunde Knochen zu entwickeln und zu erhalten, die Blutgerinnung und die Weiterleitung von Signalen in den Nerven zu steuern, sowie um andere Mikronährstoffe (Vitamin D, Vitamin K, Magnesium und Phosphor) aufnehmen und verarbeiten zu können. Auch Natrium (Na) ist für den Menschen lebenswichtig. Es ist vor allem an der Übertragung von elektrischen Impulsen und an der Herzfunktion und Muskelkontraktion beteiligt. Außerdem dient Natrium zur Weiterleitung von Nervenimpulsen und ist an der Aufnahme von Glukose und Wasser beteiligt, sowie reguliert das Blutvolumen und den Blutdruck. Eisen (Fe) spielt im Stoffwechsel nahezu aller lebenden Organismen eine Schlüsselrolle. Ein Großteil des Eisens im Körper ist an das Hämoglobin in den roten Blutkörperchen gebunden, die Sauerstoff in die Gewebe transportieren. Es dient dem Körper zur Energiegewinnung, dem Schutz der Zellen vor freien Radikalen und spielt dabei auch in der Immunabwehr eine wichtige Rolle.

Wichtig ist darüber hinaus, dass die flüssige Fruchtkomponente mit vorteilhaften rheologischen Eigenschaften bereit gestellt werden kann, die es erlauben, durch Zusatz der flüssigen Fruchtkomponente in vergleichbar geringen Anteilen zu Presssaft eine Fruchtgetränk bereit zu stellen, das die Konsistenz eines Smoothies aufweist. Beispielsweise liegt die Viskosität der flüssigen Fruchtkomponente, gemessen mit einem Rotationsviskosimeter bei einer Scherrate von 50 s⁻¹ und einer Temperatur von 20°C, im Bereich von 200 bis 10000 mPas, stärker bevorzugt im Bereich von 500 - 5000 mPas.

In Schritt e) des erfindungsgemäßen Verfahrens wird die ballaststoffhaltige flüssige Fruchtkomponente mit Presssaft zu einem ballaststoffhaltigen Saftgetränk vermischt. Bei dem Presssaft kann es sich um den Presssaft handeln, der durch das Teilentsaften der Maische in Schritt b) des erfindungsgemäßen Verfahrens gewonnen wurde. In diesem Fall kann das gesamte Volumen des Presssaftes, der durch das Teilentsaften der Maische in Schritt b) des erfindungsgemäßen Verfahrens gewonnen wurde, oder ein Teilvolumen in Schritt e) mit der ballaststoffhaltigen Fruchtkomponente vermischt werden. Es besteht jedoch auch die Möglichkeit, als Presssaft in Schritt e) einen Presssaft einzusetzen, der nicht aus der in Schritt a) bereit gestellten Maische stammt. Darüber hinaus können beide Varianten natürlich auch kombiniert werden, indem zumindest ein Teilvolumen (oder das gesamte Volumen) des in Schritt b) gewonnenen Presssafts in Schritt e) mit der flüssigen Fruchtkomponente vermischt wird, und zusätzlich ein Presssaft eingesetzt wird, der nicht aus der in Schritt a) bereit gestellten Maische stammt.

Als Presssaft, der nicht aus der in Schritt a) bereit gestellten Maische stammt, kann beispielsweise in Schritt e) ein Saft aus Früchten (einschließlich Fruchtgemüse) oder aus Gemüse, bei dem es sich nicht um Fruchtgemüse handelt, verwendet werden. Bevorzugt wird ggf. als Presssaft, der nicht aus der in Schritt a) bereit gestellten Maische stammt, ein Saft aus Obst oder Fruchtgemüse, stärker bevorzugt aus Obst, verwendet. Als Obst können beispielsweise Kernobst, Steinobst und/oder Beerenobst zum Einsatz kommen, aber auch Saft aus Zitrusfrüchten kann verwendet werden. Beispiele geeigneter Obstsorten sind Äpfel, Birnen oder Quitte als Kernobst, Aprikose, Pfirsich, Kirschen, Pflaumen oder Nektarine als Steinobst und Brombeere, Johannisbeere, Blaubeere, oder Preiselbeere als Beerenobst.

In Schritt e) werden die ballaststoffhaltige flüssige Fruchtkomponente und Presssaft bevorzugt in einem Volumenverhältnis von 5 bis 70 % (Volumen Fruchtkomponente/Volumen Presssaft), stärker bevorzugt von 10 bis 60 % vermischt.

Neben dem Presssaft können noch andere Frucht- oder Gemüsebestandteile mit der ballaststoffhaltigen, flüssigen Fruchtkomponente zur Bereitstellung des Saftgetränks vermischt werden, zum Beispiel Frucht- oder Gemüsepulpe, oder Frucht- oder Gemüsepüree. Auch im Getränke- und Lebensmittelbereich zugelassene Zusatzstoffe können bei Bedarf zugegeben werden, wie beispielsweise Antioxidantien, Süßungsmittel, Vitamine, Mineralien, Pflanzenextrakte, Proteine, Fettsäuren, Mono-, Di-, Oligo- oder Polysaccharide, Ballaststoffe oder Samen.
Wie vorstehend erwähnt, machen Fruchtbestandteile in der Regel mindestens 50 Gew.% des Saftgetränks aus, stärker bevorzugt mindestens 80 Gew.%, noch stärker bevorzugt mindestens 90 Gew.%. Besonders bevorzugt werden Saftgetränke hergestellt, die ausschließlich aus Fruchtbestandteilen bestehen.
Nach dem Vermischen der flüssigen Fruchtkomponente, des Presssaftes und ggf. weiterer Frucht- oder Gemüsebestandteile oder Zusatzstoffe wird die erhaltene Mischung bevorzugt homogenisiert, z.B. mit Hilfe einer Hochdruckhomogenisation. Dazu werden bevorzugt Drücke im Bereich von 100 bis 250 bar (10 bis 25 MPa), stärker bevorzugt 150 bis 250 bar (15 bis 25 MPa) eingesetzt. Nach dem Vermischen, oder nach dem Vermischen und Homogenisieren, wird darüber hinaus bevorzugt eine thermische Pasteurisation durchgeführt. Wie dem Fachmann geläufig ist, kann die Pasteurisationstemperatur geeignet in Abhängigkeit des pH-Werts des Saftgetränks gewählt werden, wobei bei höheren pH-Werten auch höhere Temperaturen verwendet werden. Die Temperatur beträgt dabei bevorzugt 60 bis 120 °C, stärker bevorzugt 80 bis 120 °C, und besonders bevorzugt 80 bis 96 °C. Die Haltezeit bei der erhöhten Temperatur beträgt bevorzugt 10s bis 60s.
Die Viskosität des ballaststoffhaltigen Saftgetränks, das mit dem erfindungsgemäßen Verfahren hergestellt wurde, liegt bevorzugt im Bereich von 30 bis 1000 mPas, stärker bevorzugt in einem Bereich von 50 bis 1000 mPas, und noch stärker bevorzugt von 100 bis 1000 mPas gemessen mit einem Rotationsviskosimeter bei einer Scherrate von 50 s⁻¹ und 20 °C.

Die wesentlichen Aspekte der Erfindung sind in den Ansprüchen definiert.

### Beispiele

### Herstellung des ballaststoffhaltigen Saftgetränks

Äpfel der Aussortierung Tafelobst wurden aus einem Silo zur Waschung und Handsortierung gefördert und in einer Rätzmühle auf eine für den normalen Pressvorgang günstige Korngröße vermahlen. Die so erhaltene Maische wurde einer Bandpresse zugefördert, wo 50 Gew.% Direktsaft, bezogen auf das Maischegewicht vor dem Pressen als 100 Gew% abgepresst wurden. Der gewonnen Direktsaft wurde anschließend pasteurisiert.

Die verbliebene pumpfähige, feuchte und teilentsaftete Maische wurde mittels Röhrenwärmetauscher auf 50°C erhitzt und in einem Lagertank mit 500 ppm einer Lösung einer handelsüblichen Pektinase versetzt, die man 90 Minuten bei leichtem Rühren einwirken ließ. Anschließend wurde die enzymierte, teilentsaftete Maische auf einer Püreelinie unter Verwendung eines Siebs mit einer Siebgröße von 2 mm bei einer Temperatur von 30 °C kalt extrahiert. Als Austrag bei der Kaltextraktion erhielt man eine lockere und trockene Mischung aus Stiel-, Kern- und Schalenresten. Danach wurde die einmal extrahierte, enzymierte und teilentsaftete Maische auf 90 °C erwärmt und in einen Stapeltank gepumpt. Nach kurzer Haltezeit wurde unter Verwendung eines Siebs mit einer Siebgröße von 0,6 mm heiß extrahiert. Abschließend wurde die erhaltene ballaststoffhaltige flüssige Fruchtkomponente pasteurisiert und rückgekühlt.

Aus dem aus der Teilabpressung erhaltenen Direktsaft und der flüssigen Fruchtkomponente wurde eine Mischung definierter Anteile hergestellt, homogenisiert und nach Pasteurisation als Endprodukt abgefüllt.

### Herkömmliche Püreeherstellung

Äpfel der Aussortierung Tafelobst wurden gewaschen und der Maischemühle zugeführt. Danach wurde die Maische auf einer Püreelinie unter Verwendung eines Siebs mit einer Siebgröße von 2 mm bei einer Temperatur von 20 °C kalt extrahiert. Im Anschluss wurde die einmal extrahierte Maische im Röhrenerhitzer auf 90 °C erwärmt und in die zweite Siebstufe gefahren. Unter Verwendung eines Siebs mit einer Siebgröße von 0,6 mm wurde das Püree heiß extrahiert. Abschließend wurde das erhaltene Püree pasteurisiert und rückgekühlt.

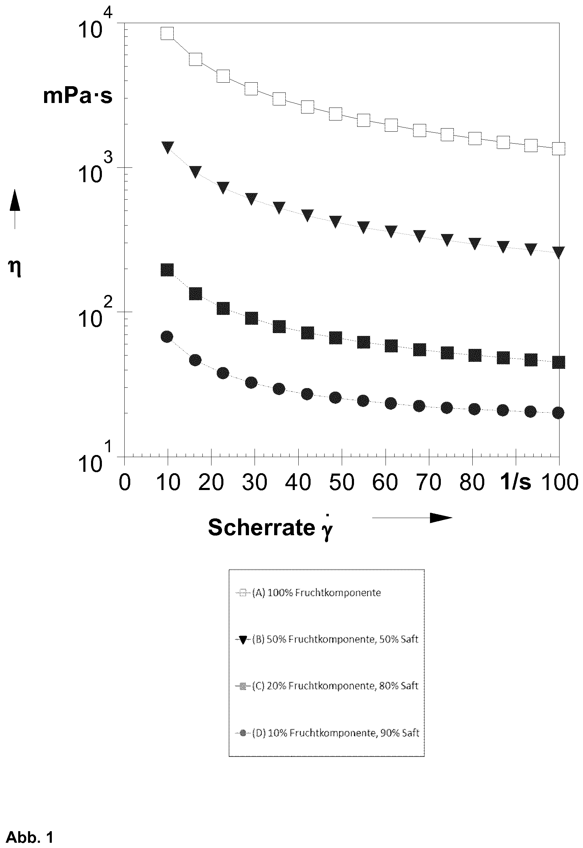

Abbildung 1 zeigt die Viskositäten in Abhängigkeit der Scherraten von 100% Fruchtkomponente mit Mischungen mit 50%, 80% und 90% Saft.

Die Abbildungen 2 bis 5 zeigen einen Vergleich charakteristischer Eigenschaften des bei der Teilabpressung gewonnenen Direktsafts ("Saft"), der ballaststoffhaltigen flüssigen Fruchtkomponente ("Fruchtkomponente") und dem nach dem herkömmlichen Verfahren gewonnenen Püree. Die Ergebnisse für die Fruchtkomponente wurden auf 12°Brix umgerechnet. Da kleinere Abweichungen bestanden, wurde auf einheitliche Brix umgerechnet

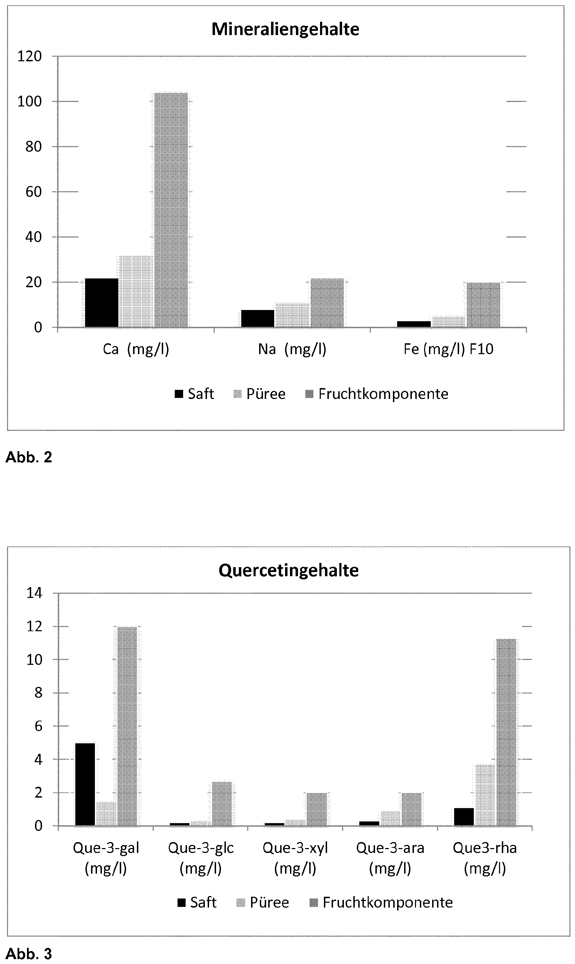

Abb. 2 zeigt die Gehalte an Kalzium, Natrium und Eisen (Faktor 10) im Vergleich von Presssaft, Püree (klassisch) und Fruchtkomponente.
Abb. 3 zeigt die Gehalte an verschiedenen Quercetin-Derivaten im Vergleich von Presssaft, Püree (klassisch) und Fruchtkomponente.

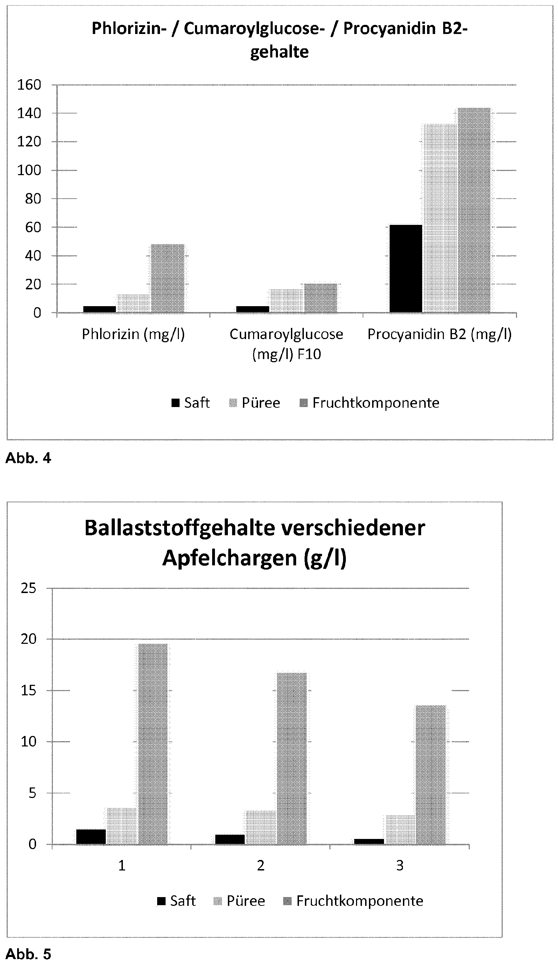

Abb. 4 zeigt die Gehalte an Phlorizin, Cumaroylglucose (Faktor 10) und Procyanidin B2 im Vergleich von Presssaft, Püree (klassisch) und Fruchtkomponente.
Abb. 5 zeigt die Ballaststoffgehalte verschiedener Apfelchargen (1-3) im Vergleich von Presssaft, Püree (klassisch) und Fruchtkomponente.

Die Messungen wurden wie folgt durchgeführt:
- Messung Viskosität: Rotationsviskosimetrie mit Rheolab MC1, Software: Rheoplus V3.62, bei 20°C, mit Messkörper: Doppelspalt DIN Z1; Profil: Vorscheren 60 s 10 s⁻¹; 60 s Ruhezeit; 10-100 s⁻¹, 100 s⁻¹, 100-10 s⁻¹ jeweils 60 s;
- Messung Ballaststoffgehalt: ASU §64 LFGB L 00.00-18 (1997);
- Messung Gehalt an Flavonoiden (ggf. Gesamt- und Einzelkomponenten): mittels Thermo HPLC;
- Messung Gehalt an Ca, Na, Fe: mittels AAS.

## Patentansprüche

1. Verfahren zur Herstellung eines ballaststoffhaltigen Saftgetränks, das die folgenden Schritte umfasst:
a) Bereitstellen einer Maische mit einer Fruchtzusammensetzung, die eine oder mehrere Arten von Früchten mit verzehrfähiger Schale und keine Zitrusfrüchte beinhaltet;
b) Teilentsaften der Maische, um einen Presssaft und eine teilentsaftete Maische zu erhalten;
c) Versetzen der teilentsafteten Maische mit einer Enzymzubereitung, die mindestens ein Enzym enthält, das in der Lage ist, ein Polysaccharid hydrolytisch zu spalten, und Einwirken lassen der Enzymzubereitung auf die teilentsaftete Maische;
d) Abtrennen von groben Bestandteilen aus der enzymierten teilentsafteten Maische mit Hilfe mindestens eines Siebs, um so eine ballaststoffhaltige, flüssige Fruchtkomponente zu gewinnen;
e) Vermischen der ballaststoffhaltigen, flüssigen Fruchtkomponente mit Presssaft zu einem ballaststoffhaltigen Saftgetränk,
wobei nach dem Teilentsaften der Maische in Schritt b) bis zur Bereitstellung des ballaststoffhaltigen Saftgetränks in Schritt e) keine Entsaftung eines Zwischenprodukts oder des Endprodukts stattfindet.

2. Verfahren nach Anspruch 1, wobei die Enzymzubereitung mindestens ein Enzym enthält, das ausgewählt ist aus pektinolytischen und cellulolytischen Enzymen.

3. Verfahren nach einem der Ansprüche 1 oder 2, wobei die Fruchtzusammensetzung der Maische eine oder mehrere Arten von Kernobst, Steinobst und/oder Beerenobst beinhaltet.

4. Verfahren nach einem der Ansprüche 1 bis 3, wobei die Fruchtzusammensetzung der Maische Äpfel und/oder Birnen enthält, bevorzugt zerkleinerte vollständige Äpfel und/oder zerkleinerte vollständige Birnen.

5. Verfahren nach einem der Ansprüche 1 bis 4, wobei das Teilentsaften der Maische in Schritt b) so erfolgt, dass eine Saftmenge gewonnen wird, deren Gewicht 10 bis 70 Gew% des Gesamtgewichts der in Schritt a) bereitgestellten Maische entspricht.

6. Verfahren nach einem der Ansprüche 1 bis 5, wobei man die Enzymzubereitung bei einer Temperatur von 20 bis 60 °C auf die teilentsaftete Maische einwirken lässt.

7. Verfahren nach einem der Ansprüche 1 bis 6, wobei man die Enzymzubereitung über einen Zeitraum von 20 bis 240 min, bevorzugt 30 bis 180 min, insbesondere bevorzugt 60 bis 120 min auf die teilentsaftete Maische einwirken lässt.

8. Verfahren nach einem der Ansprüche 1 bis 7, wobei die Enzyme der Enzymzubereitung nach dem Einwirken lassen auf die enzymierte teilentsaftete Maische durch Erhitzen auf eine Temperatur von über 60 °C deaktiviert werden.

9. Verfahren nach einem der Ansprüche 1 bis 8, wobei die enzymierte teilentsaftete Maische in Schritt d) einmalig oder mehrmalig durch ein Sieb passiert wird, vorzugsweise durch ein Sieb mit einer Siebgröße im Bereich von 0,3 bis 4,0 mm.

10. Verfahren nach einem der Ansprüche 1 bis 8, wobei die enzymierte teilentsaftete Maische in Schritt d) durch ein erstes Sieb mit einer Siebgröße von 1,0 bis 4,0 mm passiert wird, und danach durch ein zweites Sieb mit einer Siebgröße von 0,3 bis 1,5 mm.

11. Verfahren nach einem der Ansprüche 1 bis 10, wobei die ballaststoffhaltige flüssige Fruchtkomponente und der Presssaft in Schritt e) in einem Volumenverhältnis von 5 bis 70 % (Volumen Fruchtkomponente/Volumen Presssaft) vermischt werden.

12. Verfahren nach einem der Ansprüche 1 bis 11, das als weiteren Schritt eine Hochdruckhomogenisation des ballaststoffhaltigen Saftgetränks und/oder eine thermische Pasteurisation des ballaststoffhaltigen Saftgetränks umfasst.

13. Verfahren nach einem der Ansprüche 1 bis 12, wobei die Viskosität des ballaststoffhaltigen Saftgetränks, gemessen mit einem Rotationsviskosimeter bei einer Scherrate von 50 s⁻¹ bei 20 °C, im Bereich von 30 bis 1000 mPas liegt.

14. Verfahren nach einem der Ansprüche 1 bis 13, wobei der Ballaststoffgehalt der in Schritt d) gewonnenen ballaststoffhaltigen flüssigen Fruchtkomponente, gemessen nach ASU §64 LFGB L 00.00-18 (1997), im Bereich von 5 bis 30, bevorzugt 10 bis 25 g/l liegt.

## Claims

1. A process for producing a dietary fiber containing juice drink, said process comprising the following steps:
a) providing a mash having a fruit composition including one or more kinds of fruit with edible skin and no citrus fruit;
b) partial dejuicing of the mash to obtain a pressed juice and a partially dejuiced mash;
c) blending the partially dejuiced mash with an enzyme preparation containing at least one enzyme capable of hydrolytically cleaving a polysaccharide and allowing the enzyme preparation to act on the partially dejuiced mash;
d) separating coarse components from the enzymated partially dejuiced mash by means of at least one sieve to thus obtain a dietary fiber containing liquid fruit component;
e) mixing the dietary fiber containing liquid fruit component with pressed juice to give a dietary fiber containing juice drink,
wherein after the partial dejuicing of the mash in step b) until the provision of the dietary fiber containing juice drink in step e), no dejuicing of an intermediate product or of the final product takes place.

2. The process as claimed in claim 1, wherein the enzyme preparation contains at least one enzyme selected from pectinolytic and cellulolytic enzymes.

3. The process as claimed in any one of claims 1 or 2, wherein the fruit composition of the mash includes one or more kinds of pome fruit, stone fruit and/or soft fruit.

4. The process as claimed in any one of claims 1 to 3, wherein the fruit composition of the mash contains apples and/or pears, preferably chopped whole apples and/or chopped whole pears.

5. The process as claimed in any one of claims 1 to 4, wherein the partial dejuicing of the mash in step b) is performed such that an amount of juice is obtained, the weight of which corresponds to 10 to 70% by weight of the total weight of the mash provided in step a).

6. The process as claimed in any one of claims 1 to 5, where the enzyme preparation is allowed to act on the partially dejuiced mash at a temperature of from 20 to 60°C.

7. The process as claimed in any one of claims 1 to 6, wherein the enzyme preparation is allowed to act on the partially dejuiced mash over a period of from 20 to 240 min, preferably from 30 to 180 min, particularly preferably from 60 to 120 min.

8. The process as claimed in any one of claims 1 to 7, wherein the enzymes of the enzyme preparation, after having acted on the enzymated partially dejuiced mash, are deactivated by heating to a temperature above 60°C.

9. The process as claimed in any one of claims 1 to 8, wherein the enzymated partially dejuiced mash is passed through a sieve, preferably through a sieve having a mesh size within the range of from 0.3 to 4.0 mm, once or several times in step d).

10. The process as claimed in any one of claims 1 to 8, wherein the enzymated partially dejuiced mash is passed through a first sieve having a mesh size of from 1.0 to 4.0 mm and subsequently through a second sieve having a mesh size of from 0.3 to 1.5 mm in step d).

11. The process as claimed in any one of claims 1 to 10, wherein the dietary fiber containing liquid fruit component and the pressed juice are mixed at a volume ratio of from 5 to 70% (volume of fruit component/volume of pressed juice) in step e).

12. The process as claimed in any one of claims 1 to 11, which as a further step comprises high-pressure homogenization of the dietary fiber containing juice drink and/or thermal pasteurization of the dietary fiber containing juice drink.

13. The process as claimed in any one of claims 1 to 12, wherein the viscosity of the dietary fiber containing juice drink, measured using a rotational viscometer at a shear rate of 50 s⁻¹ at 20°C, is within the range of from 30 to 1000 mPas.

14. The process as claimed in any one of claims 1 to 13, wherein the dietary fiber content of the dietary fiber containing liquid fruit component obtained in step d), measured in accordance with ASU §64 LFGB L 00.00-18 (1997), is within the range of from 5 to 30, preferably from 10 to 25 g/l.

## Revendications

1. Procédé d'obtention d'une boisson à base de jus contenant des fibres alimentaires, lequel comporte les étapes suivantes :
a) la fourniture d'un empâtage présentant une composition de fruits, qui comporte un ou plusieurs types de fruits à coque propre à la consommation et aucun agrume ;
b) l'extraction partielle du jus de l'empâtage, afin d'obtenir un jus pressé et un empâtage dont le jus a été partiellement extrait ;
c) le mélange de l'empâtage dont le jus a été partiellement extrait à une préparation enzymatique qui contient au moins un enzyme apte à causer l'hydrolyse d'un polysaccharide, et le fait de laisser agir la préparation enzymatique sur l'empâtage dont le jus a été partiellement extrait ;
d) la séparation des constituants grossiers sur l'empâtage enzymé dont le jus a été partiellement extrait à l'aide d'au moins un tamis, afin d'obtenir ainsi un composant de fruit liquide contenant des fibres alimentaires ;
e) le mélange du composant de fruit liquide contenant des fibres alimentaires au jus pressé de manière à produire une boisson à base de jus contenant des fibres alimentaires,
dans lequel après l'extraction partielle du jus de l'empâtage à l'étape b) jusqu'à la fourniture de la boisson à base de jus contenant des fibres alimentaires à l'étape e), aucune extraction de jus d'un produit intermédiaire ou du produit final n'a lieu.

2. Procédé selon la revendication 1, dans lequel la préparation enzymatique contient au moins une enzyme, qui est sélectionné parmi des enzymes pectolytiques et cellulolytiques.

3. Procédé selon l'une quelconque des revendications 1 ou 2, dans lequel la composition de fruits de l'empâtage comporte un ou plusieurs types de fruit à pépins, de fruit à noyau et/ou de baie.

4. Procédé selon l'une quelconque des revendications 1 à 3, dans lequel la composition de fruits de l'empâtage contient des pommes et/ou des poires, de préférence des pommes entières broyées et/ou des poires entières broyées.

5. Procédé selon l'une quelconque des revendications 1 à 4, dans lequel l'extraction partielle de jus de l'empâtage à l'étape b) s'effectue de sorte qu'une quantité de jus est obtenue, dont le poids correspond à 10 à 70 % en poids du poids total de l'empâtage fourni à l'étape a).

6. Procédé selon l'une quelconque des revendications 1 à 5, dans lequel on laisse agir la préparation enzymatique sur l'empâtage dont le jus a été partiellement extrait à une température de 20 à 60°C.

7. Procédé selon l'une quelconque des revendications 1 à 6, dans lequel on laisse agir la préparation enzymatique sur l'empâtage dont le jus a été partiellement extrait pendant une période de 20 à 240 min, de préférence de 30 à 180 min, de manière particulièrement préférée de 60 à 120 min.

8. Procédé selon l'une quelconque des revendications 1 à 7, dans lequel les enzymes de la préparation enzymatique, après qu'on a laissé agir celle-ci sur l'empâtage enzymé dont le jus a été partiellement extrait, sont désactivés en étant chauffés à une température supérieure à 60°C.

9. Procédé selon l'une quelconque des revendications 1 à 8, dans lequel l'empâtage enzymé dont le jus a été partiellement extrait est passé à l'étape d) une ou plusieurs fois à travers un tamis, de préférence à travers un tamis dont les mailles présentent une dimension dans la plage de 0,3 à 4,0 mm.

10. Procédé selon l'un de points 1 à 8, dans lequel l'empâtage enzymé dont le jus a été partiellement extrait est passé à l'étape d) à travers un premier tamis dont les mailles présentent une dimension de 1,0 à 4,0 mm, et après cela à travers un deuxième tamis dont les mailles présentent une dimension de 0,3 à 1,5 mm.

11. Procédé selon l'une quelconque des revendications 1 à 10, dans lequel le composant de fruit liquide contenant des fibres alimentaires et le jus pressé sont mélangés à l'étape e) selon un rapport volumique de 5 à 70 % (volume composant de fruit/volume jus pressé).

12. Procédé selon l'une quelconque des revendications 1 à 11, qui comporte comme étape supplémentaire une homogénéisation haute pression de la boisson à base de jus contenant des fibres alimentaires et/ou une pasteurisation thermique de la boisson à base de jus contenant des fibres alimentaires.

13. Procédé selon l'une quelconque des revendications 1 à 12, dans lequel la viscosité de la boisson à base de jus contenant des fibres alimentaires, mesurée à l'aide d'un viscosimètre rotatif à une vitesse de cisaillement de 50 s⁻¹ à 20°C, se situe dans la plage de 30 à 1 000 mPas.

14. Procédé selon l'une quelconque des revendications 1 à 13, dans lequel la teneur en fibres alimentaires du composant de fruit liquide contenant des fibres alimentaires obtenu à l'étape d), mesurée selon ASU §64 LFGB L 00.00-18 (1997), se situe dans la plage de 5 à 30, de préférence de 10 à 25 g/l.
